(19)

Europäisches
Patentamt
European
Patent Office
Office européen
des brevets

(11) **EP 4 343 720 A1**

(12) **EUROPEAN PATENT APPLICATION**
published in accordance with Art. 153(4) EPC

(43) Date of publication:
**27.03.2024 Bulletin 2024/13**

(21) Application number: **21940962.0**

(22) Date of filing: **08.11.2021**

(51) International Patent Classification (IPC):
*G06V 30/18* (2022.01)          *G06T 7/60* (2017.01)
*G01C 21/30* (2006.01)

(86) International application number:
**PCT/RU2021/000488**

(87) International publication number:
**WO 2022/245245 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2021 RU 2021114066**

(71) Applicant: **Obshchestvo s Ogranichennoi
Otvetstvennostiu
"Evokargo"
Moscow, 129085 (RU)**

(72) Inventors:
• **KIBALOV, Vladislav Igorevich
Moscow, 119361 (RU)**
• **KABAKOV, Anatolii Evgenevich
Moscow,  115516 (RU)**
• **SHIPITKO, Oleg Sergeevich
Moskovskiy, 108811 (RU)**

(74) Representative: **Klemm, Rolf
patentfactory
Patentanwaltskanzlei Klemm
Machtlfinger Strasse 9 / 4.OG
81379 München (DE)**

(54) **METHOD OF DETERMINING THE POSITION OF A LAND VEHICLE**

(57)    The invention relates to the field of navigation, namely methods of autonomous positioning of ground vehicles (GV), including automated mobile systems.

The proposed method of determining the position of a land vehicle includes the following steps: a map is formed in the form of images with linear objects located in the plane of the road along which the vehicle is moving, the specified map is loaded into the memory of the vehicle's onboard computer, images from cameras placed on the vehicle are sent to the onboard computer, the received images are processed images with the selection of environmental objects, evaluate the movements and orientation in the vehicle space in time based on information received from onboard sensors, evaluate the current position of the vehicle in space using the implementation of a particle filter algorithm based on the formation of a set of particle hypotheses about the position of the vehicle with the possibility of their subsequent movements, compare the selected environmental objects the media on the images from cameras with a map loaded into the onboard computer, considering the position of each hypothesis particle, assess the probability of each hypothesis particle, and then resample them.

EP 4 343 720 A1

**Description**

The invention relates to the field of navigation, namely methods of autonomous positioning of ground vehicles (GV), including automated mobile systems.

Because the number of autonomous vehicles and robotic systems is growing, the task of positioning such systems is becoming more important. An accurate assessment of one's own position in space is necessary for precise traffic control, route planning and safety during the operation of autonomous vehicles, preventing the possibility of collisions.

The following technical solutions are known from this field of technology.

There is a known method (patent RU 2621480) in which a map with objects of the environment in which the vehicle is moving is loaded into the vehicle's memory block, images from cameras mounted on the vehicle are received on the on-board computer during movement, the resulting images are processed with the selection of environmental objects (edges), initialize a set of particles, which are the assumed positions and orientations of a moving body with the possibility of their subsequent movements and convert information about the environmental object from the map data for each particle into a virtual image captured from the assumed position and orientation, compare the image of the object and the virtual image for each particle, assign a higher estimate value if there are more overlapping edges between images, and also assigns a higher estimate value if there are more edges that are not overlapping edges and for which the edge-to-edge distance, which is the distance between the edge in the edge image and the edge in the virtual image, is less than or equal to the specified value, the position of the moving body is estimated based on the probability value for each particle.

A method is known for assessing the position / orientation of a moving object (patent JP5867176), in which a three-dimensional map with objects of the environment in which the vehicle is moving is loaded into the memory of the on-board computer, images from cameras mounted on the vehicle are received during movement to the on-board computer, the resulting images are processed with the selection of environmental objects, movements are evaluated and the orientation in space of the vehicle in time based on information received from on-board sensors (for example, odometry, GPS receiver), initialize a set of particles-hypotheses about the spatial position of the vehicle and move each of the particles in accordance with the readings of onboard sensors, estimate the probability of each particle in accordance with a probabilistic model based on a comparison of a priori three-dimensional maps with camera images with selected environmental objects.

There is a known method (WO2019092418) for determining the position of a vehicle, including the stages of loading and storing a data set of environmental objects into the vehicle's onboard computer, during the movement of the vehicle, data on environmental objects are obtained from cameras, the presence of the observed object in the environmental data set is determined using an artificial neural network (ANN), movements and orientation are evaluated within the vehicle in time, based on information received from on-board sensors (odometry, inertial navigation system, GNSS), the location and orientation of the vehicle are determined using a particle filter algorithm, which initializes a set of particle hypotheses about the position of the vehicle in the initial position and moves each particle in accordance with the readings of on-board sensors, the probability of each hypothesis particle from the initialized set is estimated using a probabilistic model, considering the results of detecting the observed landmark object in the data set of environmental objects.

The common disadvantages for the presented methods of positioning autonomous vehicles, known from the state of the art, is that the probability estimation models implemented in them for each hypothesis particle do not assess the reliability of information about the position of the vehicle in space, which the hypothesis particles contain, based on selected linear objects from camera images, considering the restricted access zone for the vehicle, differ in the initialization of numerous particles-hypotheses about the position of the vehicle, which leads to an increase in the localization error of the vehicle, reduces the reliability and stability of the positioning systems within which the method is implemented, impose more stringent requirements on the computing power of positioning systems.

The method disclosed in the source WO2019092418 is technically the closest to the claimed invention and can act as a prototype.

The task to be solved by the claimed invention is to create a method for positioning autonomous ground vehicles using a particle filter method based on the formation of a set of hypothesis particles containing probabilistic information about the position of the vehicle, with the possibility of their subsequent movements in accordance with the information about the path traveled and the angular position of the vehicle, determined on based on the readings received from on-board sensors and the assessment of the current position of the vehicle based on determining the probability of each particle-hypothesis about the position of the vehicle in space based on comparing an a priori given map with linear objects with the current results of identification of environmental objects, while assessing the reliability of information about the position of the vehicle in space stored in each particle-hypothesis.

The technical result of the claimed invention is to increase the accuracy of determining the position of a ground vehicle in space while ensuring the speed and reliability of the implementation of the proposed method for positioning the vehicle.

The technical result of the claimed invention is achieved by implementing a method for positioning a ground vehicle, in which a map is formed in the form of images with linear objects located in the plane of the road along which the vehicle is moving, the specified map is loaded into the memory of the on-board computer of the vehicle, images from cameras placed on the on-board computer are received on the vehicle, processing the obtained images with the selection of environmental objects, the movements, and orientation in the vehicle space are estimated in time based on information received from onboard sensors, the current position of the vehicle in space is estimated using the implementation of a particle filter algorithm based on the formation of a set of particle hypotheses about the position of the vehicle with the possibility of their subsequent movements, compare the selected environmental objects in the images from the cameras with the map loaded into the onboard computer, considering the position of each hypothesis particle, evaluate the probability of each hypothesis particle, and then resample them.

The peculiarity of the proposed method is that a map with linear objects is formed with the allocation of areas of obstruction for the vehicle, and also when implementing the particle filter algorithm, a set of particle hypotheses about the position of the vehicle in the initial position before the start of movement is formed, sequential values of the readings of the coordinates of the vehicle and the angle of rotation of the vehicle around the vertical axis with a difference in the relative coordinates of the vehicle location and the angle of rotation of the vehicle around the vertical axis are determined as the difference between successive values of readings coming from on-board sensors, based on these readings, the distance traveled by the vehicle and the angular position are determined considering the kinematic model of the vehicle movement using additive Gaussian noise, based on the data obtained, information about the position of the vehicle is generated by the movement of each hypothesis particles in accordance with the measurements of on-board sensors, then evaluate the reliability of information about the position of the vehicle, considering the map and images received from cameras, and evaluate the current position of the vehicle, determining how each hypothesis particle about the position of the vehicle correlates with the readings from on-board sensors at a given time based on determining the probability of each hypothesis particle according to the formula:

$$p(z^t \mid x^t, m) = \frac{w_{e_t}^n * w_{om_t}^n}{\sum_{n=1}^N w_t^n},$$

where

$p(z^t \mid x^t, m)$ - the probability of each particle-hypothesis about the position of the vehicle in space at time t;

$z^t = (z_0, \dots, z_t)$ -measurements of onboard sensors at time t;

$x^t = (x_t, y_t, \theta_t)^T$ -a hypothesis about the position of the vehicle in space at time t, including two-dimensional coordinates of the vehicle $x_t, y_t$ and the angle of rotation around the vertical axis $\theta_t$;

m - map data with linear objects located in the plane of the road and a dedicated vehicle impassability zone;

$w_{e_t}^n$ -a function for assessing the error of identification of environmental objects from camera images, considering the probability of a false identification error;

$w_{om_t}^n$ - a function for estimating the probability of finding a vehicle in an impassable zone, taking the value 1 if the position is passable and 0 otherwise;

$w_t^n$ - estimation of the probability of a hypothesis particle from the formed set at time t;

n=1, ..., N is the ordinal index of the hypothesis particle;

N is the number of particles-hypotheses about the position of the vehicle,

in this case, the resulting estimate of the position of the vehicle is determined as the arithmetic mean for all hypotheses after resampling of the hypothesis particles.

Resampling is understood as a stochastic process in which hypothesis particles move into a new sample, with a probability equal to the probability estimate of the hypothesis.

In the preferred embodiment of the claimed method, encoders placed on the wheels of the vehicle, an inertial navigation system and a GNSS receiver act as onboard sensors.

In another preferred embodiment of the claimed method, a map with linear objects is loaded into an onboard computer in vector format, and then translated into raster format before starting work.

Assessment of the reliability of information about the location of the vehicle (two-dimensional coordinates) and the angle of rotation of the vehicle around the vertical axis (yaw angle) at the current time, performed for each hypothesis particle storing this information, considering the map and images obtained from optical cameras when comparing them with a subsequent assessment of the current position of the vehicle based on the definition the probabilities of each particle-hypothesis about the position of the vehicle in space from the formed set improves the quality of positioning of an autonomous vehicle in terms of increasing the accuracy of determining the location and angular position of the vehicle while achieving stability and reliability of the implementation of the proposed method as part of the positioning system on the vehicle.

In addition, it is possible to analyze the sensitivity of the implementation of the proposed method in terms of the impact on the localization error of the vehicle of such factors as the applied algorithms for identifying environmental objects from camera images, environmental conditions, maneuvers performed by the vehicle.

1. shows a diagram of the positioning system of an autonomous vehicle, based on which the proposed method is implemented, where 1 - optical cameras, 2 - a module for identifying linear objects, 3 - a localization module, 4 - a digital map, 5 - a module for assessing the distance traveled, 6 - encoders placed on the wheels of the vehicle, 7 - inertial navigation system, 8 - on-board computer, 9 - GNSS.

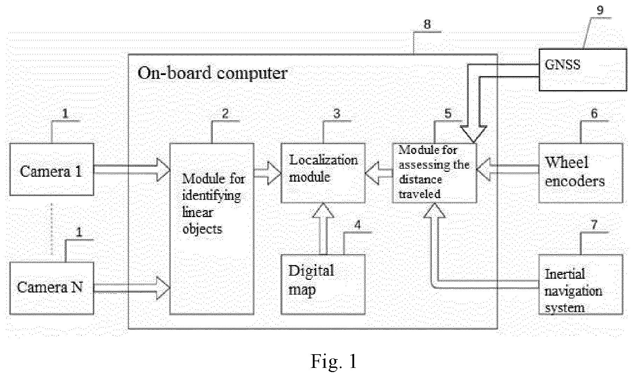

The method is carried out as follows (Fig. 1).

The method of positioning a ground vehicle is designed for the exact position in space (on a plane) of an autonomous ground vehicle performing movement, preferably inside enclosed spaces, such as warehouses, industrial sites, etc.

The method can be used to localize wheeled and tracked robots, as well as other autonomous ground vehicles.

At the first stage of the implementation of the method, a digital map (4) is formed in the form of a multichannel image with linear objects located in the plane of the road along which the vehicle is moving.

Linear objects plotted on a digital map can be represented as road markings, road edges and other linear stationary objects in the road plane.

In addition, the digital map contains areas that characterize the impassability zones for the vehicle, which allows the implementation of the particle filter method not to consider unlikely hypotheses about the position of the vehicle, thereby reducing their number and, consequently, the requirements for computing resources.

The specified digital map (4) is loaded into the memory of the on-board computer of the vehicle (8) in vector format, and then, before starting work, it is converted into a raster format, storing the specified map in the on-board computer of the vehicle (8) in the form of a raster multichannel image. This storage method makes it easy to edit and modify the map, get a raster map of arbitrary accuracy (scale), as well as add new a priori information about linear objects in the form of additional layers.

During the movement of the vehicle, the on-board computer (8) receives images from optical cameras (1) placed on the vehicle, while processing the images obtained is carried out by the linear object identification software module (2), designed to isolate (identify) environmental objects.

The movements and orientation in the vehicle space in time during movement are evaluated based on the information received from on-board sensors presented in the form of encoders (6) placed on the wheels of the vehicle, an inertial navigation system (7) and a GNSS receiver (9).

The operating conditions of the vehicle are considered, so in case of loss of a signal from GNSS or its error, which is possible, for example, in tunnels, forests, garages, enclosed spaces, this type of source of navigation information is not considered and, therefore, GNSS serves only as a means of support for localization of the vehicle.

It is important to note that this set of sensors cannot provide accurate positioning without additional correction, since measurements of both types of sensors are subject to the accumulation of errors during active operation, which is why the relative coordinates of the vehicle location and the angle of rotation of the vehicle around the vertical axis are determined as the difference between the sequential values of the readings of these onboard sensors.

The current position of the vehicle in space, performed in the localization module (3), is evaluated using a particle filter algorithm based on the formation of a set of particle hypotheses about the position of the vehicle in the initial position before the vehicle moves with the possibility of their subsequent movements in accordance with the information about the path traveled and the angular position of the vehicle (5), determined based on the readings received from onboard sensors (wheel encoders, inertial navigation system, GNSS) (6, 7, 9), and subsequent assessment of the probability of each hypothesis particle by comparing a priori given digital map with linear objects (4) stored in the vehicle's onboard computer (8) with identified objects the environment in the images (2) obtained from optical cameras (1).

When applied to the task of positioning the vehicle, each hypothesis particle from the generated set contains probabilistic information about the position of the vehicle in space, which is data on the two-dimensional coordinates of the vehicle in the coordinate system associated with the digital map and the angle of rotation around the vertical axis (yaw angle) at the current time.

Information about the location of the vehicle and its angular position of each hypothesis particle from the formed set is changed during the movement of the vehicle in accordance with the readings received from the onboard motion sensors (6, 7, 9).

Wheel encoders (6) provide indications of the number of revolutions of the vehicle wheels, according to which the coordinates of the vehicle position are determined by integration, the inertial navigation system (7) provides indications of the vehicle orientation (roll, pitch, and yaw angles), the GNSS receiver (9) provides data on the coordinates of the vehicle location and speed.

At the same time, sequential values of the readings of the two-dimensional coordinates of the vehicle and the angle of rotation of the vehicle around the vertical axis with a time difference are obtained from these onboard sensors, the relative coordinates of the location of the vehicle and the angle of rotation of the vehicle around the vertical axis are determined as the difference between the sequential values of the readings of these onboard sensors, based on the information received, the path of the vehicle and the change in the angle of rotation are determined in time with the use of a kinematic model of vehicle movement implemented in the module for estimating the distance traveled (5).

Additive Gaussian noise with zero mean value is applied to the position and orientation of each hypothesis particle to account for the noise measurements of onboard sensors.

Then, the reliability of probabilistic information about the position of the vehicle presented in each hypothesis particle from the generated set is evaluated, considering the map (4) loaded into the onboard computer (8) and images obtained from optical cameras (1). The specified reliability assessment is carried out considering the error of identification of environmental objects from images obtained from optical cameras, a false error of the specified identification and an estimate of the probability of finding a vehicle in a restricted area for its movement.

The probability of each hypothesis particle from the generated set is estimated as follows:

$$p(z^t \mid x^t, m) = \frac{w_{e_t}^n * w_{om_t}^n}{\sum_{n=1}^{N} w_t^n},$$

where

$p(z^t \mid x^t, m)$ - the probability of each particle-hypothesis about the position of the vehicle in space at time t;

$z^t = (z_0, \dots, z_t)$ -measurements of onboard sensors at time t;

$x^t = (x_t, y_t, \theta_t)^T$ -a hypothesis about the position of the vehicle in space at time t, including two-dimensional coordinates of the vehicle $x_t, y_t$ and the angle of rotation around the vertical axis $\theta_t$;

m - map data with linear objects located in the plane of the road and a dedicated vehicle impassability zone;

$w_{e_t}^n$ -a function for assessing the error of identification of environmental objects from camera images, considering the probability of a false identification error;

$w_{om_t}^n$ - a function for estimating the probability of finding a vehicle in an impassable zone, taking the value 1 if the position is passable and 0 otherwise;

$w_t^n$ - estimation of the probability of a hypothesis particle from the formed set at time t;

n=1, ..., N is the ordinal index of the hypothesis particle;

N is the number of particles-hypotheses about the position of the vehicle.

The probability of each particle hypothesis about the position of the vehicle is proportional to the intersection of linear objects plotted on a digital map and linear environmental objects recognized from optical camera images and converted to the coordinate system of the digital map considering the current position of the particle.

Assessment of the reliability of information about the location of the vehicle (two-dimensional coordinates) and the angle of rotation of the vehicle around the vertical axis (yaw angle) at the current time is performed for each hypothesis particle storing this information, taking into account the error of identification of environmental objects from images obtained from optical cameras, a false error of this identification and an estimate of the probability of finding the vehicle in a restricted area for his movement.

The identification error model is directly encoded into the digital card at the preliminary step of its preparation. It is assumed that the error has a Gaussian distribution with zero mathematical expectation in two-dimensional coordinates, for which a Gaussian blur is applied to the digital map of linear objects. The standard deviation $\sigma$ in this case expresses the magnitude of the expected error, and should be experimentally determined for different algorithms for identifying environmental objects.

The evaluation of the false error of identification of linear objects is carried out to account for possible situations when identification is performed in an image area that does not contain an image of a linear object of the environment. The probability of false positives error is described by a uniform distribution.

Thus, to determine the probability of a particle hypothesis about the position of the vehicle in space, the assessment of the error of identification of environmental objects from images obtained from cameras, considering the commission of false identification of these objects, is based on the sum of the probabilistic error of identification of environmental objects distributed according to the normal law and the probabilistic error of false identification distributed according to the uniform law, in this case, the coordinates from the coordinate system of the digital map are converted into the pixel intensity value corresponding to these coordinates on the digital map.

In addition, the areas of vehicle impassability plotted on the digital map provide an opportunity to isolate unreliable information about the vehicle's position in space (two-dimensional coordinates of the vehicle and the angle of rotation of the vehicle around the vertical axis), which allows you to ignore unlikely hypotheses about the vehicle's position.

For this purpose, a function is introduced to estimate the probability of finding a vehicle in an impassable zone, which takes the value 1 if the vehicle location is passable for movement and 0 otherwise.

At the same time, in the case of unreliable information about the position of the vehicle in space, the probability assessment for this hypothesis particle is not carried out.

After evaluating the probability of each hypothesis particle from the formed set, at the current stage, resampling is performed - a stochastic process in which hypothesis particles move to a new sample, with a probability equal to the probability estimate of the hypothesis, while the total number of particles remains unchanged, only the probabilities of hypothesis particles falling into the vehicle impassability zone are not evaluated.

This process can be carried out in any known way from the state of the art, for example, resampling wheel (the "Dropout Wheel" method),

The resulting estimate of the position of the vehicle is determined as the arithmetic mean for all hypotheses after resampling of the hypothesis particles.

Thus, the proposed invention is a universal method for positioning autonomous ground vehicles, providing high accuracy in determining the location and angular position in the vehicle space with increased processing speed of readings obtained from heterogeneous sources of navigation information, while achieving a stable and reliable implementation of the method on the vehicle without strict requirements for the computational resources of the positioning system.

**Claims**

1. A method of determining the position of a land vehicle, which form a map in form of images with lines that are located in the plane of the road on which vehicle is moving, loads the specified map in the memory of the onboard computer of the vehicle, in the process of moving the vehicle on-Board computer receives images from cameras placed on the vehicle, processes the received image with the selection of the objects of the environment, evaluate the movement and orientation in space of the vehicle in time based on information obtained from onboard sensors, estimate the current position of the vehicle in space through the implementation of the algorithm of the particle filter, based on the formation of many particles of hypotheses about the position of the vehicle with the possibility of their subsequent movements, compares selected features of the environment in the camera images loaded in the onboard computer of the map with the position of each particle hypothesis, estimate the probability of each particle hypothesis, followed by their resampling implementation, **characterized in that** map linear features form with select areas of obstruction to the vehicle, as well as in the implementation of the algorithm of the particle filter to form a variety of particle hypotheses about the position of the vehicle in initial position before you start driving, on-Board sensors get a consistent reading of the vehicle and the coordinates of the rotation angle of the vehicle around the vertical axis with the time difference, determine the relative coordinates of the location of the vehicle and the angle of rotation of the vehicle around the vertical axis as the difference between consecutive values of the readings coming from on-Board sensors based on the evidence determine the distance traveled and vehicle angular position given the kinematic model of the vehicle with the use of additive Gaussian noise, based on the data obtained form the position information of the vehicle movement of each particle hypothesis in accordance with the measurements of on-Board sensors then evaluate the accuracy of the information on the position of the vehicle in map view and the images obtained from the cameras, and evaluate the current position of the vehicle, determining how every bit the hypothesis that the position of vehicle is correlated with the readings from the onboard sensors in a given time based on the definition of the probability of each particle hypothesis according to the formula:

$$p(z^t \mid x^t, m) = \frac{w_{e_t}^n * w_{om_t}^n}{\sum_{n=1}^{N} w_t^n},$$

where

$p(z^t \mid x^t, m)$ - the probability of each particle-hypothesis about the position of the vehicle in space at time t;

$z^t = (z_0, ..., z_t)$ -measurements of onboard sensors at time t;

$x^t = (x_t, y_t, \theta_t)^T$-a hypothesis about the position of the vehicle in space at time t, including two-dimensional coordinates of the vehicle $x_t, y_t$ and the angle of rotation around the vertical axis $\theta_t$;

m - map data with linear objects located in the plane of the road and a dedicated vehicle impassability zone;

$w_{e_t}^n$ -a function for assessing the error of identification of environmental objects from camera images, taking into account the probability of a false identification error;

$w_{om_t}^n$ - a function for estimating the probability of finding a vehicle in an impassable zone, taking the value 1 if the position is passable and 0 otherwise;

$w_t^n$ - estimation of the probability of a hypothesis particle from the formed set at time t;

n=1, ..., N is the ordinal index of the hypothesis particle;

N is the number of particles-hypotheses about the position of the vehicle,

in this case, the resulting estimate of the position of the vehicle is determined as the arithmetic mean for all hypotheses after resampling of the hypothesis particles.

2. The method of determining the position of a land vehicle according to claim 1, **characterized in that** the on-board sensors are encoders placed on the wheels of the vehicle, an inertial navigation system and a GNSS receiver.

3. The method of determining the position of a land vehicle according to claim 1, **characterized in that** a map with linear objects is loaded into an onboard computer in vector format, and then translated into raster format before starting work.

Fig. 1

## INTERNATIONAL SEARCH REPORT

| | International application No. |
|---|---|
| | PCT/RU 2021/000488 |

**A. CLASSIFICATION OF SUBJECT MATTER**

G06V 30/18 (2022.01); G06T 7/60 (2017.01); G01C 21/30 (2006.01)

According to International Patent Classification (IPC) or to both national classification and IPC

**B. FIELDS SEARCHED**

Minimum documentation searched (classification system followed by classification symbols)

G06V 30/00, 30/18, G06T 1/00, 7/00, 7/60, 21/30

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| D, A | WO 2019/092418 A1 (HORIBA MIRA LIMITED) 16.05.2019 | 1-3 |
| D, A | RU 2621480 C1 (NISSAN MOTOR CO., LTD.) 06.06.2017 | 1-3 |
| A | EP 2662828 A1 (AUTOLIV DEVELOPMENT AV) 13.11.2013 | 1-3 |
| A | JP 2013186551 A (NISSAN MOTOR CO LTD) 19.09.2013 | 1-3 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 March 2022 (04.03.2022) | 24 March 2022 (24.03.20220 |

| Name and mailing address of the ISA/    RU | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2621480
- JP 5867176 B
- WO 2019092418 A